# EUROPEAN PATENT APPLICATION

(11) **EP 3 128 279 A1**
(43) Date of publication of application: **08.02.2017**
(21) Application number: 15765565.5
(22) Date of filing: 13.03.2015
(51) Int. Cl.: F28D 9/00, F28F 3/02, F24H 1/34, F24H 8/00

(54) **HEAT EXCHANGER AND MANUFACTURING METHOD FOR UNIT PLATE CONSTITUTING HEAT EXCHANGER**

(30) Priority: 18.03.2014 KR 20140031441
(71) Applicant: Kyungdong Navien Co., Ltd., Pyeongtaek-si, Gyeonggi-do 450-818 (KR)
(72) Inventor: KIM, Young Mo, Gwangmyeong-si Gyeonggi-do 423-762 (KR)
(74) Representative: Habermann, Hruschka & Schnabel
(86) International application number: PCT/KR2015/002457
(87) International publication number: WO 2015/141993

(57) **Abstract**

A heat exchanger of the present invention comprises: a mixture inflow unit into which a mixture of air and fuel is introduced; a burner for combusting the mixture introduced through the mixture inflow unit; a sensible-heat exchange unit that is disposed around the burner such that heat is exchanged between combustion gas caused by the combustion of the burner and a heating medium, and is constituted with a plurality of unit plates stacked on each other; a latent-heat exchange unit in which heat is exchanged between the combustion gas having passed through the sensible-heat exchange unit and a heating medium and which is constituted with a plurality of unit plates stacked on each other; and a combustion gas discharge unit for discharging the combustion gas having passed through the latent-heat exchange unit, wherein a heating medium passage, a combustion gas passage, and a combustion gas discharge passage that connects the combustion gas passage and the combustion gas discharge unit are formed in the interior of the stacked unit plates constituting the sensible-heat exchange unit, the heating medium passage and the combustion gas passage being alternately formed to be separated from and adjacent to each other, and a heating medium passage and a combustion gas passage are alternately formed to be separated from and adjacent to each other in the interior of the stacked unit plates constituting the latent-heat exchange unit.

## Description

### Technical Field

The present disclosure relates to a heat exchanger provided in a boiler for heating or hot water and a method for manufacturing a unit plate configuring the heat exchanger, and more particularly, to a heat exchanger and a method for manufacturing a unit plate configuring the heat exchanger, which has a simplified structure by stacking the unit plate in a multiple stage to integrally form a heating medium passage, a combustion gas passage, and a combustion gas discharge passage, and also facilitates processing of the unit plate configuring a sensible-heat exchange unit and a latent-heat exchange unit.

### Background Art

A boiler for heating or hot water is a device for applying heat to heating water or direct water (hereinafter, referred to as a 'heating medium') by a heat source to heat a desired zone or supply hot water, and is configured to include a burner for burning a mixture of gas and air, and a heat exchanger for transferring combustion heat of combustion gas to the heating medium.

A boiler produced in the early days employed a heat exchanger of heating a heating medium using only sensible heat generated upon combustion of a burner, whereas a boiler produced recently is a condensing boiler designed to improve thermal efficiency, which is provided with a sensible heat exchanger for absorbing sensible heat of combustion gas generated in a combustion chamber and a latent heat exchanger for absorbing latent heat generated upon condensation of water vapor that is contained in the combustion gas undergone heat exchange in the sensible heat exchanger. Such a condensing boiler is commercialized in an oil boiler as well as a gas boiler to thereby contribute much to an increase of boiler efficiency and fuel expenses reduction.

As described above, a conventional heat exchanger of a condensing type configured with a sensible heat exchanger and a latent heat exchanger has a structure in which an air blower, a fuel supply nozzle, and a burner are typically installed at an upper part of a housing, and the sensible heat exchanger and the latent heat exchanger, in which heat exchange fins are coupled to an outside of a heat exchange pipe, are sequentially installed inside the housing below the burner.

However, such a heat exchanger of a condensing type has a problem in that a dimension of the heat exchanger should be increased due to the structure in which the air blower is located at the upper part of the housing and the sensible heat exchanger and the latent heat exchanger are longitudinally located inside the housing.

As the prior art for addressing such a problem, minimizing the dimension and improving heat exchange efficiency, a heat exchanger is disclosed in Korean Registered Patent Nos. 10-1321708, 10-0581578, and 10-0813807, wherein the heat exchanger is configured with a burner located at a central part thereof and a heat exchange pipe wound on a circumference of the burner in a coil shape.

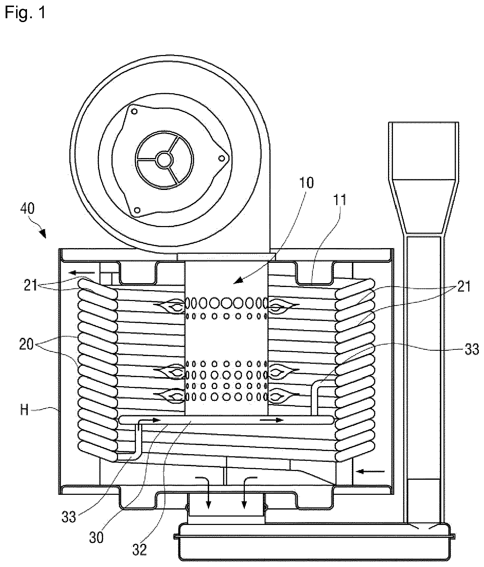

FIG. 1 shows a cross-sectional view of a heat exchanger of a condensing boiler disclosed in Korean Registered Patent No. 10-0813807. A heat exchanger 40 shown in FIG. 1 is configured to include a burner 10 installed to discharge downward combustion gas, a heat exchange pipe 20 wound on a circumference of the burner 10 in a coil shape so as to heat water supplied inside the heat exchanger 40 to a desired temperature by heat generated at the burner 10 to thereby provide the heated water as heating water or hot water, and a partition wall 30 installed at a lower side of the heat exchange pipe 20 in a horizontal direction to form a passage of combustion gas. As shown in FIG. 1, the heat exchange pipe 20 is arranged to have an inclined surface 21 that is inclined from an outside of a body to an inside thereof by a predetermined angle to be directed to a central direction of the burner 10, and one end of a connecting pipe 33 is connected to and installed at a body of the partition wall 30, which forms a communication hole 32 thereinside, thereby connecting one side of the heat exchange pipe 20 to the other side thereof through the other end of the connecting pipe 33.

However, the heat exchanger disclosed in the prior art documents has a disadvantage in which a torsional phenomenon occurs while the heat exchange pipe is helically processed to cause a difficulty in processing an entire surface of the heat exchange pipe in a uniform shape.

Also, when a heat exchange pipe is undergone a bending process, damage may occur upon the bending process due to a difference of a strain rate between an inside surface of the heat exchange pipe toward a center of a burner and an outside surface thereof opposite the inside surface, and thus the heat exchange pipe exchanging heat with combustion gas may have a limitation to be formed in a wider width. As a result, there is a structural limitation in which a sufficient area for processing an irregular shape promoting a turbulent flow on a surface of a heat exchange pipe is not secured as a configuration for more improving heat transfer efficiency between a heating medium and combustion gas.

In addition, the conventional heat exchanger has problems in that an installation structure of the heat exchanger is complicated because a housing H is separately provided as a configuration for tightly sealing an outer circumference of the heat exchange pipe 20 being helically wound, and a heat source of combustion gas is not fully transferred to a heating medium flowing inside the heat exchange pipe 20 because heat transferred to the housing H is directly radiated and dissipated to an outside thereof, wherein the heat is transferred to the housing H while the combustion gas generated by combustion of the burner 10 passes a longitudinally separated space of the heat exchange pipe 20 to flow through a space between the heat exchange pipe 20 and an inner wall of the housing H.

Additionally, the conventional heat exchanger has problems in that heat generated by the combustion of the burner 10 is transferred to a plate 11 for fixing the burner 10 to thereby cause an overheating, and also an insulating material or a heat dissipation fin at an outside of the plate 11 should be additionally provided in order to prevent such an overheating such that a complicated structure and a heat loss are induced.

### Disclosure

### Technical Problem

To address the above described problems, an object of the present disclosure is to provide a heat exchanger capable of simplifying a structure by stacking a unit plate to integrally form a heating medium passage, a combustion gas passage, and a combustion gas discharge passage, and also improving thermal efficiency by securing a large heat transfer area between a heating medium and combustion gas by forming a flow channel of the heating medium to be long in a restricted space.

Another object of the present disclosure is to provide a method for manufacturing a unit plate configuring a heat exchanger, which is capable of simplifying a manufacturing process of a unit plate configuring a sensible-heat exchange unit and a latent-heat exchange unit, and also reducing an amount of a material of the unit plate.

Still another object of the present disclosure is to provide a heat exchanger capable of more improving thermal efficiency by maximizing a collection of combustion heat of combustion gas into a heating medium, wherein the combustion gas is discharged through a combustion gas discharge passage.

### Technical Solution

To realize the above described objects, a heat exchanger of the present disclosure includes a mixture inflow unit 100 in which a mixture of air and fuel flows; a burner 200 configured to burn the mixture flowing in through the mixture inflow unit 100; a sensible-heat exchange unit 300 provided at a circumference of the burner 200, configured to exchange heat between combustion gas generated by combustion of the burner 200 and a heating medium, and configured with a plurality of unit plates being stacked; a latent-heat exchange unit 400 configured to exchange heat between the combustion gas passed the sensible-heat exchange unit 300 and the heating medium, and configured with a plurality of unit plates being stacked; and a combustion gas discharge unit 500 configured to discharge the combustion gas passed the latent-heat exchange unit 400, wherein, in an inside of each of the plurality of unit plates that are stacked to configure the sensible-heat exchange unit 300, a heating medium passage P1 and a combustion gas passage P2 are separately and alternately formed to be adjacent to each other, and also a combustion gas discharge passage P3 is formed to connect the combustion gas passage P2 to the combustion gas discharge unit 500, and wherein, in an inside of each of the plurality of unit plates that are stacked to configure the latent-heat exchange unit 400, a heating medium passage P4 and a combustion gas passage P5 are separately and alternately formed to be adjacent to each other.

In this case, each of the plurality of unit plates configuring the sensible-heat exchange unit 300 may be configured with a first plate and a second plate which are stacked, wherein the first plate may include a first plane portion A1 in which a first through hole B1 is formed at a central part thereof; a first flange portion C1 formed to extend from an edge of the first plane portion A1 to be bended to an outward side thereof; and a passage forming protruding portion D1 formed to be convex upward at a region between the edge of the first plane portion A1 and the first through hole B1, and wherein the second plate may include a second plane portion A2 in which a second through hole B2 of a shape corresponding to that of the first through hole B1 is formed at a central part of the second plane portion A2, and coming into tight contact with the first plane portion A1; a second flange portion C2 formed to extend from an edge of the second plane portion A2 to be bended to an outward side thereof, and coupled to a first flange portion C1 of a unit plate being located adjacent to the second flange portion C2; and a passage forming depressed portion D2 formed to be concave downward at a region between the edge of the second plane portion A2 and the second through hole B2, thereby forming the heating medium passage P1 between the passage forming protruding portion D1 and the passage forming depressed portion D2.

Each of the plurality of unit plates configuring the latent-heat exchange unit 400 may be configured with a third plate and a fourth plate which are stacked, wherein the third plate may include a third plane portion A3 in which a third through hole B3 is formed at a central part thereof; a third flange portion C3 formed to extend from an edge of the third plane portion A3 to be bended to an outward side thereof; and a passage forming protruding portion D3 formed to be convex upward at a region between the edge of the third plane portion A3 and the third through hole B3, and wherein the fourth plate may include a fourth plane portion A4 in which a fourth through hole B4 of a shape corresponding to that of the third through hole B3 is formed at a central part of the fourth plane portion A4, and coming into tight contact with the third plane portion A3; a fourth flange portion C4 formed to extend from an edge of the fourth plane portion A4 to be bended to an outward side thereof, and coupled to the third flange portion C3; and a passage forming depressed portion D4 formed to be concave downward at a region between the edge of the fourth plane portion A4 and the fourth through hole B4, thereby forming the heating medium passage P4 between the passage forming protruding portion D3 and the passage forming depressed portion D4.

The first flange portion C1 may be formed to be higher than a protruding height of the passage forming protruding portion D1, and the second flange portion C2 may be formed to be deeper than a depressed depth of the passage forming depressed portion D2, and thus a separated space forming the combustion gas passage P2 may be provided between a depressed end of a passage forming depressed portion D2 of a unit plate being located at one side among unit plates being located to be adjacent to each other, and a protruding end of a passage forming protruding portion D1 of a unit plate being located at the other end thereamong.

A plurality of gap maintaining protruding portions E1, each of which protrudes at the same height as that of the first flange portion C1, may be formed to be spaced apart from each other at the passage forming protruding portion D1 in a circumferential direction, and a plurality of gap maintaining depressed portions E2, each of which is depressed at the same depth as that of the second flange portion C2, may be formed to be spaced apart from each other at the passage forming depressed portion D2 in the circumferential direction, and thus a depressed end of each of the plurality of gap maintaining depressed portions E2 of a unit plate being located at one side among the unit plates being located to be adjacent to each other, and a protruding end of each of the plurality of gap maintaining protruding portions E1 of a unit plate being located at the other end thereamong may come into contact with each other.

A combustion gas outlet F1 may be formed at the edge of the first plane portion A1 to provide the combustion gas discharge passage P3, and a combustion gas outlet F2 may be formed at a position, which corresponds to the combustion gas outlet F1, on the edge of the second plane portion A2, and thus combustion gas passed the combustion gas passage P2 may sequentially pass the combustion gas outlets F1 and F2 which are formed at each of the unit plates configuring the sensible-heat exchange unit 300, thereby flowing toward the combustion gas discharge unit 500.

A turbulent flow forming portion G having an irregular shape may be formed at the passage forming protruding portion D1 or the passage forming depressed portion D2, wherein a protruding upper end and a depressed lower end of the turbulent flow forming portion G may be formed to come into contact with each other inside the heating medium passage P1 and the combustion gas passage P2.

As one embodiment, the passage forming protruding portion D1 may be formed to be communicated with an entire section at a region between the edge of the first plane portion A1 and the first through hole B1 along the circumferential direction, the passage forming depressed portion D2 may be formed to be communicated with an entire section at a region between the edge of the second plane portion A2 and the second through hole B2 along the circumferential direction, and a through hole may be formed at each of the plurality of gap maintaining protruding portions E1 and each of the plurality of gap maintaining depressed portions E2 so as to connect a heating medium passage P1 of the unit plate located at the one side to a heating medium passage P1 of the unit plate located at the other side adjacent to the one side, wherein the through hole may be located so as to reverse a direction of the heating medium passage P1 of the unit plate located at the one side against that of the heating medium passage P1 of the unit plate located at the other side adjacent to the one side.

In this case, a heating medium, which flowed in through a through hole formed at one side of a second plate configuring the unit plate located at one side among the unit plates being located to be adjacent to each other and configuring the sensible-heat exchange unit 300, may be branched off to both directions to flow along the heating medium passage P1, and then may pass a through hole formed at a first plate being located at the other side adjacent to the one side and a through hole formed at a second plate configuring a unit plate being located adjacent to the other side, thereby flowing in a heating medium passage P1 of the unit plate being located adjacent to the other side.

As another embodiment, the passage forming protruding portion D1 may be formed to be communicated with some section at a region between the edge of the first plane portion A1 and the first through hole B1 along the circumferential direction, the passage forming depressed portion D2 may be formed to be communicated with some section at a region between the edge of the second plane portion A2 and the second through hole B2 along the circumferential direction, and a through hole may be formed at each of the plurality of gap maintaining protruding portions E1 and each of the plurality of gap maintaining depressed portions E2 so as to connect a heating medium passage P1 of the unit plate located at the one side to a heating medium passage P1 of the unit plate located adjacent to the other side, wherein the through hole may be located so as to reverse a direction of the heating medium passage P1 of the unit plate located at the one side against that of the heating medium passage P1 of the unit plate located adjacent to the other side.

In this case, a heating medium, which flowed in through a through hole formed at one side of a second plate configuring the unit plate located at one side among the unit plates being located to be adjacent to each other and configuring the sensible-heat exchange unit 300, may flow in one direction along the heating medium passage P1, and then may pass a through hole formed at a first plate being located at the other side and a through hole formed at a second plate configuring a unit plate being located adjacent to the other side, thereby flowing in a heating medium passage P1 of the unit plate being located adjacent to the other side.

In the above described embodiments, multiple heating medium passages P1 may be configured in parallel with each other by stacking the unit plate.

A plurality of gap maintaining protruding portions E3 may be formed to be spaced apart from each other at the passage forming protruding portion D3 in a circumferential direction, and a plurality of gap maintaining depressed portions E4 may be formed to be spaced apart from each other at the passage forming depressed portion D4 in the circumferential direction, and thus an end of each of the plurality of gap maintaining protruding portions E3 of a unit plate being located at one side among the unit plates being located to be adjacent to each other and configuring the latent-heat exchange unit 400, and an end of each of the plurality of gap maintaining depressed portions E4 of a unit plate being located adjacent to the other side thereamong may come into contact with each other.

A through hole, through which the heating medium passes, may be formed at both sides opposite to each other at a maximum distance among the plurality of gap maintaining protruding portions E3, and a through hole, which corresponds to the through hole formed at the both sides among the plurality of gap maintaining protruding portions E3, may be formed at both ends opposite to each other at a maximum distance among the plurality of gap maintaining depressed portions E4, thereby allowing the heating medium to flow inside the heating medium passage P4 in both directions.

The plurality of unit plates configuring the sensible-heat exchange unit 300 may be located in a horizontal direction to be longitudinally stacked and arranged, the burner 200 may be arranged inside the sensible-heat exchange unit 300 in a longitudinal direction, and the plurality of unit plates configuring the latent-heat exchange unit 400 may be located below the sensible-heat exchange unit 300 in the horizontal direction to be longitudinally stacked and arranged.

The plurality of unit plates configuring the sensible-heat exchange unit 300 may be located in a horizontal direction to be longitudinally stacked and arranged, the burner 200 may be arranged inside the sensible-heat exchange unit 300 in a longitudinal direction, and the plurality of unit plates configuring the latent-heat exchange unit 400 may be located below the sensible-heat exchange unit 300 in the longitudinal direction to be horizontally stacked and arranged.

The plurality of unit plates configuring the sensible-heat exchange unit 300 may be located in a longitudinal direction to be horizontally stacked and arranged, the burner 200 may be arranged inside the sensible-heat exchange unit 300 in a horizontal direction, and the plurality of unit plates configuring the latent-heat exchange unit 400 may be located below the sensible-heat exchange unit 300 in the longitudinal direction to be horizontally stacked and arranged.

The plurality of unit plates may be arranged to surround the circumference of the burner 200 in a polygonal shape, a circular shape, or an oval shape.

A heating medium connecting passage P may be formed at a lateral circumferential surface of an upper part of the burner 200, wherein the heating medium connecting passage P may be connected to a heating medium passage P1 located at the upper part of the burner 200 thereby allowing the heating medium to pass the heating medium connecting passage P.

One embodiment of a method for manufacturing a unit plate configuring a heat exchanger according to the present disclosure may include preparing a base metal plate 1 to be processed as a unit plate configuring the sensible-heat exchange unit 300, and as a unit plate configuring the latent-heat exchange unit 400; cutting a central part of the base metal plate 1 in a size of a first through hole B1 of a first plate, or a size of a second through hole B2 of a second plate, thereby manufacturing a first processing plate 2 to be processed as the unit plate configuring the sensible-heat exchange unit 300 and a second processing plate 3 to be processed as the unit plate configuring the latent-heat exchange unit 400; performing sheet metal working on the first processing plate 2 to manufacture a first plate or a second plate of the unit plate configuring the sensible-heat exchange unit 300; and performing the sheet metal working on the second processing plate 3 to manufacture a third plate or a fourth plate of the unit plate configuring the latent-heat exchange unit 400.

Another embodiment of a method for manufacturing a unit plate configuring a heat exchanger according to the present disclosure may include preparing a base metal plate 1 to be processed as a unit plate configuring the sensible-heat exchange unit 300, and as a unit plate configuring the latent-heat exchange unit 400; performing sheet metal working on the base metal plate 1 to form a shape of a first plate or a second plate of the unit plate configuring the sensible-heat exchange unit 300, and a shape of a third plate or a fourth plate of the unit plate configuring the latent-heat exchange unit 400; and cutting a boundary between a part at which the shape of the first plate or the second plate is formed and a part at which the shape of the third plate or the fourth plate is formed, thereby manufacturing the first or second plate and the third or fourth plate.

### Advantageous Effects

In accordance with the heat exchanger of the present disclosure, the number of components of the heat exchanger may be reduced and a structure thereof may be simplified by stacking a plurality of unit plates manufactured in a similar pattern to form a heating medium passage and a combustion gas passage which are separately and alternately arranged to be adjacent to each other in an inner space of the stacked unit plates and integrally forming a combustion gas discharge passage at an edge.

Also, thermal efficiency may be improved by forming a heating medium passage to alternately change a channel through which a heating medium flows inside stacked unit plates in a multiple stage, thereby forming a flow channel of the heating medium to be long in a restricted space.

In addition, a plurality of unit plates are multiply stacked to configure multiple heating medium passages in parallel with each other such that a pressure loss may be minimized, a separate connection component may not be needed, and a part for connecting the heating medium passages to each other may be used as a heat exchange area.

Additionally, deformation of a unit plate due to a pressure of a heating medium may be prevented and pressure resistance performance of the unit plate may be improved by contacting and welding a shape for forming a turbulent flow to an inside of each of a heating medium passage and a combustion gas passage.

Further, a heating medium passage and a combustion gas passage are configured to connect to a unit plate, respectively, so that heat exchange may be performed through an entire unit plate, thereby more improving heat efficiency.

Moreover, a passage through which a heating medium passes may be formed at a lateral surface of an upper part of a burner, thereby preventing a burner support plate from being overheated and more improving thermal efficiency.

Furthermore, heat insulation efficiency between a sensible-heat exchange unit and a latent-heat exchange unit may be increased by allowing a heating medium to pass a space between plates configuring a heat isolator that is located between the sensible-heat exchange unit and the latent-heat exchange unit.

In accordance with the method for manufacturing a unit plate configuring a heat exchanger according to the present disclosure, plates of a sensible-heat exchange unit and a latent-heat exchange unit are concurrently manufactured using a base metal plate so that a manufacturing process of the unit plate configuring the heat exchanger may be simplified and also a manufacturing cost of the unit plate may be reduced.

### Description of Drawings

FIG. 1 is a cross-sectional view of a heat exchanger in which a heat exchange pipe is helically installed at a circumference of a conventional burner.
FIGS. 2 and 3 are perspective views of a heat exchanger according to one embodiment of the present disclosure when viewed from upper and lower sides, respectively.
FIG. 4 is a right lateral view of the heat exchanger according to one embodiment of the present disclosure.
FIG. 5 an exploded perspective view of the heat exchanger according to one embodiment of the present disclosure.
FIG. 6 is a plan view of the heat exchanger according to one embodiment of the present disclosure.
FIG. 7 is a bottom view of the heat exchanger according to one embodiment of the present disclosure.
FIG. 8 is a perspective view taken along line A-A of FIG. 6.
FIG. 9 is a dissected perspective view enlarging a part of a unit plate of a sensible-heat exchange unit shown in FIG. 8.
FIG. 10 is a dissected perspective view enlarging a part of a unit plate of a latent-heat exchange unit shown in FIG. 8.
FIG. 11 is a cross-sectional view taken along line A-A of FIG. 6.
FIG. 12 is a cross-sectional view taken along line B-B of FIG. 6.
FIG. 13 is a cross-sectional view taken along line C-C of FIG. 7.
FIG. 14 is a diagram for describing a flow channel of a heating medium in a latent-heat exchange unit of a heat exchanger according to one embodiment of the present disclosure.
FIG. 15 is a diagram for describing a flow channel of a heating medium in a sensible-heat exchange unit of a heat exchanger according to one embodiment of the present disclosure.
FIG. 16 is a perspective view of a stacked structure of unit plates of a sensible-heat exchange unit according to another embodiment of the present disclosure.
FIG. 17 is an exploded perspective view of FIG. 16.
FIG. 18 is a diagram for describing a flow channel of a heating medium in the unit plate of the sensible-heat exchange unit shown in FIG. 16.
FIGS. 19 and 20 are perspective views of a heat exchanger according to another embodiment of the present disclosure when viewed from different directions, respectively.
FIGS. 21 and 22 are perspective views of a heat exchanger according to still another embodiment of the present disclosure when viewed from different directions, respectively.
FIG. 23 is a perspective view of a stacked structure of unit plates according to still another embodiment of the present disclosure.
FIGS. 24A and 24B are a perspective view and a partially dissected perspective view of an embodiment in which a heating medium passage is additionally formed at an upper part of a burner, respectively.
FIG. 25 is a diagram illustrating one embodiment of a method for manufacturing a unit plate configuring a heat exchanger according to the present disclosure.
FIG. 26 is a diagram illustrating another embodiment of a method for manufacturing a unit plate configuring a heat exchanger according to the present disclosure.

### [Description of Reference Numerals]

| | |
|---|---|
| 100: Mixture Inflow Unit | 110: Upper Cover Plate |
| 112: Heat Transfer Medium Discharge Pipe | 200: Burner |
| 300: Sensible-Heat Exchange Unit | |
| 310, 320, 330, 340, 350, 360, 370, and 380: Unit Plates of Sensible Heat Exchanger | |
| 310a, 320a, 330a, 340a, 350a, 360a, 370a, and 380a: First Plates | |
| 310b, 320b, 330b, 340b, 350b, 360b, 370b, and 380b: Second Plates | |
| 390: Heat Isolator | 390a: Upper Cover Panel |
| 390b: Lower Cover Panel | 400: Latent-Heat Exchange Unit |
| 410, 420, 430, 440, and 450: Unit Plates of Latent Heat Exchanger | |
| 410a, 420a, 430a, 440a, and 450a: Third Plates | |
| 410b, 420b, 430b, 440b, and 450b: Fourth Plates | |
| 610, 620, 630, and 640: Unit Plates | |
| 610a, 620a, 630a, and 640a: First Plates | |
| 610b, 620b, 630b, and 640b: Second Plates | |
| 500: Combustion Gas Discharge Unit | 510: Lower Cover Plate |
| 520 and 560: Housings | |
| 530: Combustion Gas Discharge Pipe | |
| 531: Condensed Water Discharge Pipe | 540: Flue |
| A, A1, A2, A3, and A4: Plane Portions | |
| B, B1, B2, B3, and B4: Through Holes | |
| C, C1, C2, C3, and C4: Flange Portions | |
| D, D1, and D3: Flow Passage Forming Protruding Portions | |
| D2 and D4: Flow Passage Forming Depressed Portions | |
| E1 and E3: Gap Maintaining Protruding Portions | |
| E2 and E4: Gap Maintaining Depressed Portions | |
| F1 and F2: Combustion Gas Outlets | |
| G: Turbulent Flow Forming Portion | |
| P1 and P4: Heat Transfer Medium Flow Passages | |
| P2 and P5: Combustion Gas Flow Passages | |
| P3: Combustion Gas Discharge Passage | |
| P: Heat Transfer Medium Connecting Flow Passage | |

### Modes of the Invention

Hereinafter, a configuration and an action with respect to a preferred embodiment of the present disclosure will be described in detail as follows with reference to the accompanying drawings.

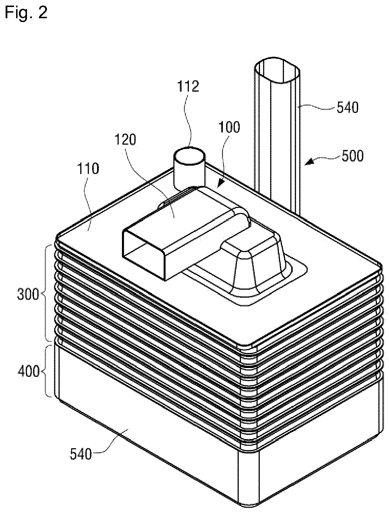

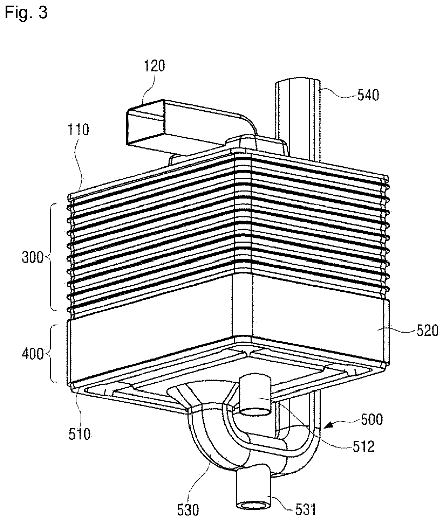

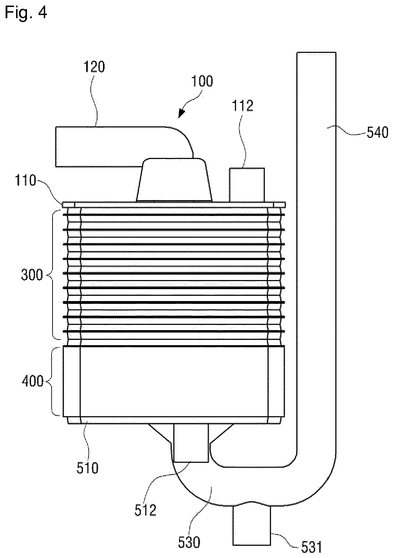

With reference to FIGS. 2 to 5, a heat exchanger according to the present disclosure is configured to include a mixture inflow unit 100 in which a mixture of air and fuel flows, a burner 200 for burning the mixture flowing in through the mixture inflow unit 100, a sensible-heat exchange unit 300 provided at a circumference of the burner 200 to exchange heat between combustion gas generated by combustion of the burner 200 and a heating medium and configured with a plurality of unit plates 310, 320, 330, 340, 350, 360, 370, and 380 which are longitudinally stacked, a latent-heat exchange unit 400 exchanging heat between the combustion gas passed the sensible-heat exchange unit 300 and the heating medium and configured with a plurality of unit plates 410, 420, 430, 440, and 450 which are longitudinally stacked, and a combustion gas discharge unit 500 through which the combustion gas passed the latent-heat exchange unit 400 is discharged.

The mixture inflow unit 100 is configured to include an upper cover plate 110 at which a through hole 111 is formed at one side of the upper cover plate 110, wherein a heating medium discharge pipe 112 passes through the through hole 111 and a mixture inflow pipe 120 passing through a center of the upper cover plate 110 to allow the mixture to flow in the mixture inflow pipe 120.

The burner 200 burns the mixture of the air and the fuel flowing therein through the mixture inflow unit 100, to thereby generate combustion gas of high temperature. The burner 200 is configured to be fixed to a burner support plate 210 to generate flame in a downward direction. The burner support plate 210 is configured with a plane portion A in which a through hole B is formed at a central part thereof, wherein the burner 200 passes through the through hole B, a flange portion C extending from an edge of the plane portion A to a downward side thereof to be bended to an outward side thereof, and a depressed portion D having a downwardly concave shape at a region between the edge of the plane portion A and the through hole B.

The sensible-heat exchange unit 300 is configured to absorb sensible heat of combustion gas generated by combustion of the burner 200, the latent-heat exchange unit 400 is configured to absorb latent heat generated while water vapor contained in combustion gas, which has undergone heat exchange at the sensible-heat exchange unit 300, is condensed, and each of the sensible-heat exchange unit 300 and the latent-heat exchange unit 400 is configured with a plurality of unit plates being stacked.

The combustion gas discharge unit 500 is configured with a lower cover plate 510 covering a lower part of the latent-heat exchange unit 400, a housing 520 on which the lower cover plate 510 is seated and surrounding and tightly sealing the latent-heat exchange unit 400, and a combustion gas discharge pipe 530 and a flue 540 communicating with a lower part of the housing 520 to discharge combustion gas. A through hole 511 through which a heating medium inflow pipe 512 passes and an exhaust gas discharge hole 513 for discharging the combustion gas passed the latent-heat exchange unit 400 to the combustion gas discharge pipe 530 are formed at the lower cover plate 510, and a condensed water discharge pipe 531 is coupled to a lower part of the combustion gas discharge pipe 530.

Hereinafter, a configuration and an action of each of the sensible-heat exchange unit 300 and the latent-heat exchange unit 400, which are a characteristic configuration of the present disclosure, will be described.

The present disclosure is characterized in that a heating medium passage P1, a combustion gas passage P2, and a combustion gas discharge passage P3 are integrally formed inside the plurality of unit plates 310, 320, 330, 340, 350, 360, 370, and 380 which configure the sensible-heat exchange unit 300 and are stacked in a multiple stage.

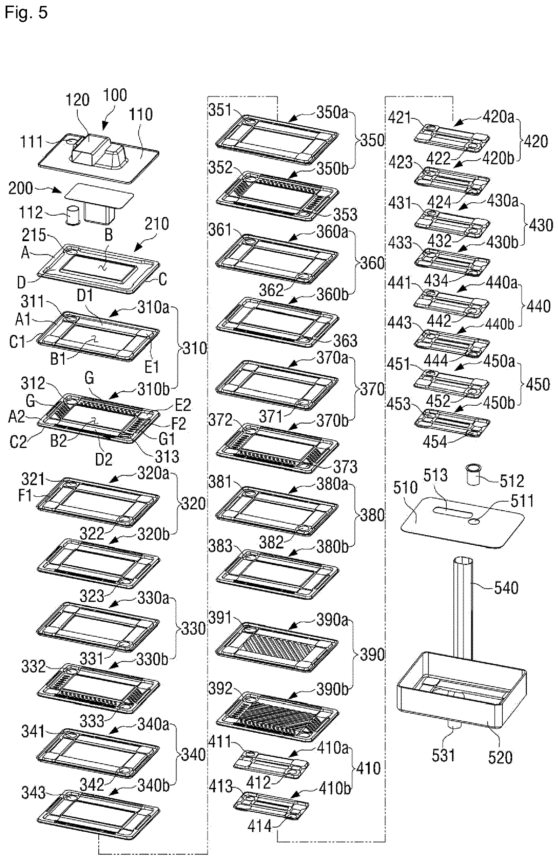

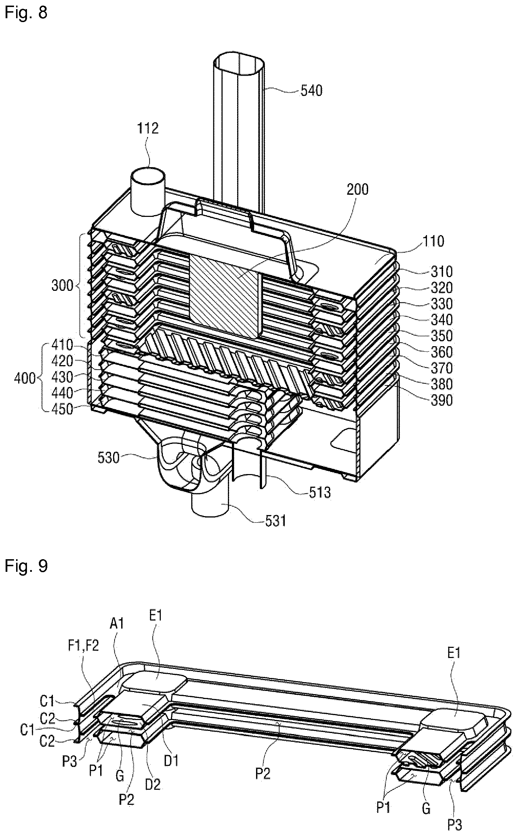

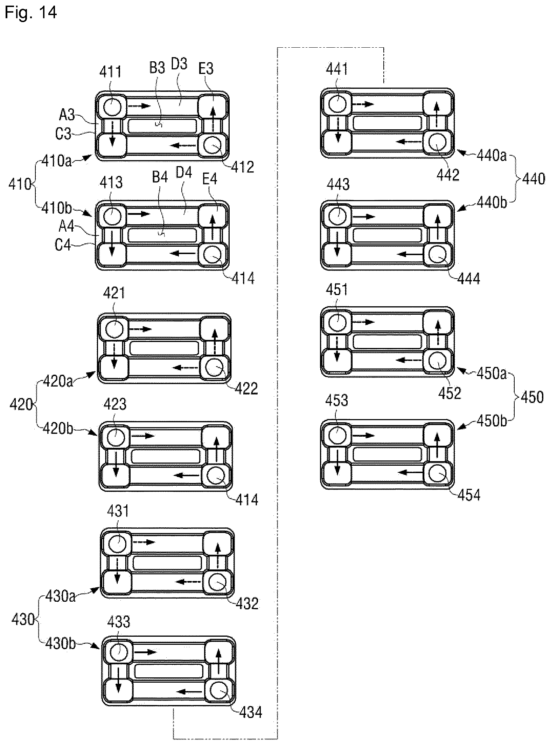

With reference to FIGS. 5, 8, 9, 14, and 15, the sensible-heat exchange unit 300 is configured with the plurality of unit plates 310, 320, 330, 340, 350, 360, 370, and 380 which are longitudinally stacked, and the latent-heat exchange unit 400 is configured with the plurality of unit plates 410, 420, 430, 440, and 450 which are longitudinally stacked. And, a heat isolator 390 is provided at a lower part of the sensible-heat exchange unit 300 to spatially separate the sensible-heat exchange unit 300 from the latent-heat exchange unit 400 and to prevent sensible heat generated at the sensible-heat exchange unit 300 from being directly transferred to the latent-heat exchange unit 400.

The unit plates 310, 320, 330, 340, 350, 360, 370, and 380, which configure the sensible-heat exchange unit 300, are configured with first plates 310a, 320a, 330a, 340a, 350a, 360a, 370a, and 380a located at upper parts of the unit plates 310, 320, 330, 340, 350, 360, 370, and 380, and second plates 310b, 320b, 330b, 340b, 350b, 360b, 370b, and 380b coupled to lower parts of the first plates 310a, 320a, 330a, 340a, 350a, 360a, 370a, and 380a, respectively.

The unit plates 410, 420, 430, 440, and 450, which configure the latent-heat exchange unit 400, are configured with third plates 410a, 420a, 430a, 440a, and 450a located at upper parts of the unit plates 410, 420, 430, 440, and 450, and fourth plates 410b, 420b, 430b, 440b, and 450b coupled to lower parts of the third plates 410a, 420a, 430a, 440a, and 450a, respectively.

Hereinafter, the first plates 310a, 320a, 330a, 340a, 350a, 360a, 370a, and 380a configuring the sensible-heat exchange unit 300 will be referred to as a 'first plate,' the second plates 310b, 320b, 330b, 340b, 350b, 360b, 370b, and 380b configuring the sensible-heat exchange unit 300 will be referred to as a 'second plate,' the third plates 410a, 420a, 430a, 440a, and 450a configuring the latent-heat exchange unit 400 will be referred to as a 'third plate,' and the fourth plates 410b, 420b, 430b, 440b, and 450b configuring the latent-heat exchange unit 400 will be referred to as a 'fourth plate,' and then a configuration of each of them will be described.

The first plate includes a first plane portion A1 in which a first through hole B1 is formed at a central part thereof, a first flange portion C1 extending from an edge of the first plane portion A1 to an upper side thereof to be bended to an outward side thereof, a passage forming protruding portion D1 formed to be convex upward at a region between the edge of the first plane portion A1 and the first through hole B1, and a combustion gas outlet F1 longitudinally passing through the edge of the first plane portion A1 to provide a combustion gas discharge passage P3 at the edge thereof.

The second plate includes a second plane portion A2 in which a second through hole B2 of a shape corresponding to that of the first through hole B1 is formed at a central part of the second plane portion A2 and having an upper surface coming into tight contact with a bottom surface of the plane portion A1; a second flange portion C2 extending from an edge of the second plane portion A2 to a lower side thereof to be bended to an outward side thereof and coupled to a first flange portion C1 of a unit plate being located below the second flange portion C2; a passage forming depressed portion D2 formed to be concave downward at a region between the edge of the second plane portion A2 and the second through hole B2, thereby forming a heating medium passage P1 between the passage forming protruding portion D1 and the passage forming depressed portion D2; and a combustion gas outlet F2 longitudinally passing through the edge of the second plane portion A2 to provide the combustion gas discharge passage P3 at the edge thereof.

The first flange portion C 1 is formed to be higher than a protruding height of the passage forming protruding portion D1, and the second flange portion C2 is formed to be deeper than a depressed depth of the passage forming depressed portion D2. Consequently, among unit plates being longitudinally stacked to be adjacent to each other, a longitudinally separated space is provided between a lower end of a passage forming depressed portion D2 of a unit plate located at an upper side thereamong and an upper end of a passage forming protruding portion D1 of a unit plate located at a lower side thereamong, thereby forming a combustion gas passage P2.

And, a plurality of gap maintaining protruding portions E1, each of which protrudes at the same height as that of the first flange portion C1, are formed to be spaced apart from each other in a circumferential direction at the passage forming protruding portion D1, and a plurality of gap maintaining depressed portions E2, each of which is depressed at the same depth as that of the second flange portion C2, are formed at the passage forming depressed portion D2. Therefore, among the unit plates being longitudinally stacked to be adjacent to each other, a second flange portion C2 formed at a unit plate located at an upper side thereamong is coupled to a first flange portion C1 formed at a unit plate being located at a lower side thereamong, and a lower end of a gap maintaining depressed portion E2 formed at the unit plate being located at the upper side and an upper end of a gap maintaining protruding portion E1 formed at the unit plate being located at the lower side come into supporting contact with each other.

As described above, because the second flange portion C2 at the upper side and the first flange portion C1 at the lower side are coupled to each other, the gap maintaining depressed portion E2 at the upper side and the gap maintaining protruding portion E1 at the lower side come into supporting contact with each other, and the combustion gas outlets F1 and F2 being longitudinally communicated are formed at the edge of each of the first plate and the second plate, the heating medium passage P1, the combustion gas passage P2, and the combustion gas discharge passage P3 are integrally formed inside the unit plates being longitudinally stacked to be adjacent to each other when the unit plates are stacked, and also bond strength between the unit plates may be improved.

Also, one of the passage forming protruding portion D1 and the passage forming depressed portion D2, or both of them may be configured to include a turbulent flow forming portion G of an irregular shape. The turbulent flow forming portion G may be configured in an outward protruding shape or an inward depressed shape on a surface of each of the passage forming protruding portion D1 and the passage forming depressed portion D2, and such a shape may be configured in a variety of shapes including an embossed shape, an oval shape, a rib shape inclined to one side, or the like.

According to the configuration of the turbulent flow forming portion G, heat exchange efficiency may be more improved by promoting generation of a turbulent flow in a flow of a heating medium passing the heating medium passage P1 and a flow of combustion gas passing the combustion gas passage P2.

Further, when the turbulent flow forming portion G is configured to be formed at the passage forming protruding portion D1 of the first plate in an downwardly depressed shape and at the passage forming depressed portion D2 of the second plate in an upwardly protruding shape, to thereby contact a lower end of the downwardly depressed segment of the turbulent flow forming portion G to an upper end of the upwardly protruding segment thereof, bond strength between the passage forming protruding portion D1 and the passage forming depressed portion D2 may be increased, thereby preventing the passage forming protruding portion D1 and the passage forming depressed portion D2 from being deformed and damaged due to pressure of the heating medium passing the heating medium passage P1.

In a helical heat exchange pipe structure according to the related art, deformation and damage problems of a pipe are caused by a bending process of the pipe so that there is a limitation to a structure in which it may be very difficult to secure a sufficient area on a surface of a heat exchange pipe so as to form an irregular shape promoting a turbulent flow on the surface thereof. On the other hand, according to the present disclosure, a heat exchanger is configured by stacking the unit plates so that there is an advantage in which a space for forming the turbulent flow forming portion G may be secured to be large.

The third plate includes a third plane portion A3 in which a third through hole B3 is formed at a central part thereof, a third flange portion C3 extending from an edge of the third plane portion A3 to be bended to an outward side thereof, and a passage forming protruding portion D3 formed to be convex upward at a region between the edge of the third plane portion A3 and the third through hole B3.

The fourth plate includes a fourth plane portion A4 in which a fourth through hole B4 of a shape corresponding to that of the third through hole B3 is formed at a central part of the fourth plane portion A4 and coming into tight contact with the third plane portion A3, a fourth flange portion C4 extending from an edge of the fourth plane portion A4 to be bended to an outward side thereof and coupled to the third flange portion C3, and a passage forming depressed portion D4 formed to be concave downward at a region between the edge of the fourth plane portion A4 and the fourth through hole B4, thereby forming a heating medium passage P4 between the passage forming protruding portion D3 and the passage forming depressed portion D4.

A plurality of gap maintaining protruding portions E3 are formed to be spaced apart from each other in a circumferential direction at the passage forming protruding portion D3, and a plurality of gap maintaining depressed portions E4 are formed to be spaced apart from each other in a circumferential direction at the passage forming depressed portion D4. Therefore, among the unit plates being located to be adjacent to each other and configuring the latent-heat exchange unit 400, an end of a gap maintaining protruding portion E3 formed at a unit plate located at a lower side thereamong and an end of a gap maintaining depressed portion E4 formed at a unit plate located to be adjacent to and over the unit plate at the lower side may come into supporting contact with each other.

Hereinafter, flow channels of combustion gas and a heating medium in the heat exchanger according to the present disclosure will be described.

Firstly, a flow channel of combustion gas will be described.

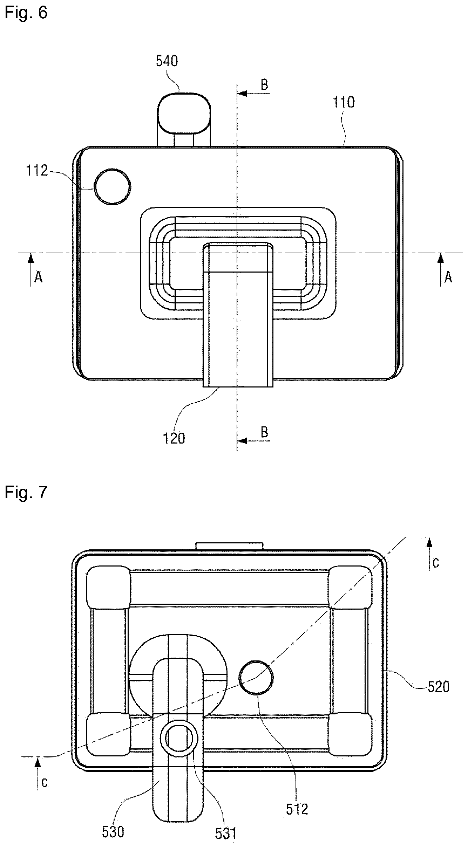

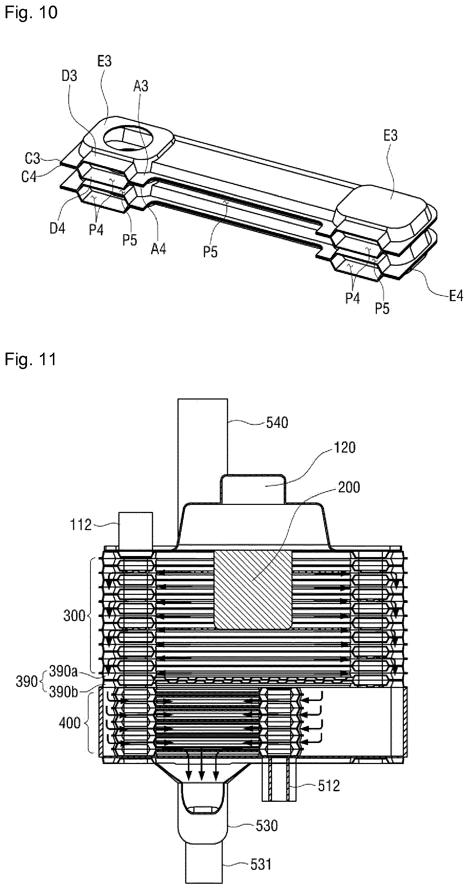

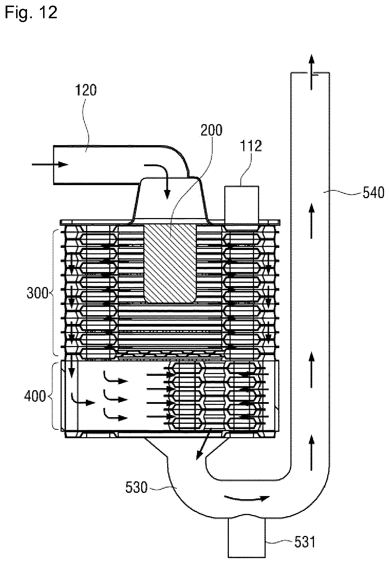

With reference to FIGS. 6 and 8 to 12, a longitudinal flow of combustion gas generated by combustion of the burner 200 is blocked by the upper cover plate 110 and the heat isolator 390, and thus the combustion gas flows in a radially outward direction centering on the burner 200 to pass the combustion gas passage P2 formed at each of the unit plates 310, 320, 330, 340, 350, 360, 370, and 380 configuring the sensible-heat exchange unit 300. While passing the combustion gas passage P2, the combustion gas transfers heat to a heating medium passing the heating medium passage P1 of the sensible-heat exchange unit 300.

In the course of passing the combustion gas passage P2, generation of a turbulent flow is concurrently promoted in the flow of the combustion gas and the heating medium by the turbulent flow forming portion G formed at the passage forming protruding portion D1 and the passage forming depressed portion D2 so that heat transfer efficiency between the combustion gas and the heating medium may be increased.

The combustion gas, which passed the combustion gas passage P2, sequentially passes the combustion gas discharge passages P3 to move downward, wherein the combustion gas discharge passages P3 are longitudinally communicated by the combustion gas outlets F1 and F2 formed at each of the unit plates 310, 320, 330, 340, 350, 360, 370, and 380 being longitudinally stacked and the heat isolator 390. At this point, while the combustion gas is passing the combustion gas discharge passage P3, heat transferred to an outer wall of the combustion gas discharge passage P3 is retransferred to the heating medium passing the heating medium passage P1 via the plane portions A1 and A2, the passage forming protruding portion D1, and the passage forming depressed portion D2 by a conducting method, and thus a heat loss may be minimized to more improve heat efficiency.

Thereafter, a downward flow of the combustion gas entering inside the housing 520 of the latent-heat exchange unit 400 is blocked by the lower cover plate 510, and the combustion gas passes a combustion gas passage P5, which is formed at each of the unit plates 410, 420, 430, 440, and 450 configuring the latent-heat exchange unit 400, to flow inside the latent-heat exchange unit 400. In the course of the above described process, latent heat of condensed water contained in water vapor of the combustion gas is transferred to the heating medium passing the heating medium passage P4 of the latent-heat exchange unit 400, thereby preheating the heating medium.

The combustion gas, which passed the combustion gas passage P5 of the latent-heat exchange unit 400, is discharged upward through the combustion gas discharge pipe 530 and the flue 540 by passing the exhaust gas discharge hole 513 of the lower cover plate 510, and the condensed water is discharged downward through the condensed water discharge pipe 531 connected to the lower part of the combustion gas discharge pipe 530.

Hereinafter, a flow channel of a heating medium will be described.

A flow channel of a heating medium is configured such that the heating medium flows in the latent-heat exchange unit 400 through the heating medium inflow pipe 512 connected to the lower part thereof, and absorbs latent heat and sensible heat by sequentially passing the latent-heat exchange unit 400 and the sensible-heat exchange unit 300, thereby being discharged through the heating medium discharge pipe 112 connected to an upper part of the sensible-heat exchange unit 300.

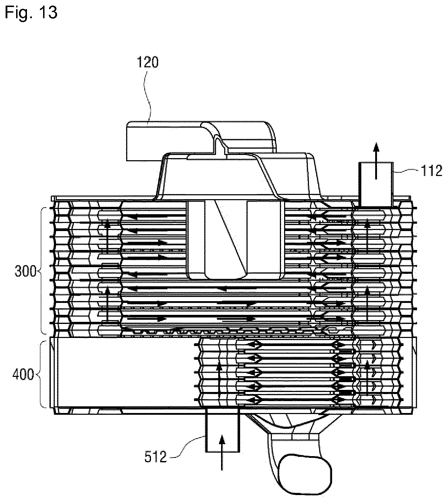

Firstly, with reference to FIGS. 5, 7, 13 and 14, a flow channel of a heating medium in the latent-heat exchange unit 400 will be described. In each of the third plates of the unit plates 410, 420, 430, 440, and 450 configuring the latent-heat exchange unit 400, the gap maintaining protruding portion E3 is formed at each of four corners of the passage forming protruding portion D3, and through holes 411, 412, 413, 414, 421, 422, 423, 424, 431, 432, 433, 434, 441, 442, 443, 444, 451, 452, 453, and 454, which longitudinally correspond to some of them, are formed at the gap maintaining protruding portions E3 being diagonally located to each other. And, the through hole 412 formed at the third plate 410a of the unit plate 410 being located at an upper-most stage and the through hole 454 formed at the fourth plate 450b of the unit plate 450 being located at a lower-most stage are sealed so as to block water leakage.

Therefore, the heating medium, which flowed in through the heating medium inflow pipe 512, flows in the heating medium passage P4 through the through hole 453 of the unit plate 450 being located at the lower-most stage of the latent-heat exchange unit 400, and then passes the through hole 411 formed at the unit plate 410 being located at the upper-most stage, a through hole 392 formed at a lower cover panel 390b of the heat isolator 390, and a through hole 391 formed at an upper cover panel 390a via the heating medium passage P4 of each of the unit plates being located at stages from a lower side to an upper side, thereby moving to the sensible-heat exchange unit 300.

In this case, the heating medium may flow in and out the heating medium passage P4, which is formed inside each of the unit plates 410, 420, 430, 440, and 450 forming the latent-heat exchange unit 400, through the through holes being formed to diagonally face each other, and thus flow in both directions to form the flow channel of the heating medium to be long, thereby increasing collection efficiency of latent heat.

Next, one embodiment of a flow channel of a heating medium in the sensible-heat exchange unit 300 will be described with reference to FIGS. 5, 13, and 15.

The present embodiment is configured such that a heating medium, which flowed in through a through hole formed at one side of a second plate configuring a unit plate being located at a lower stage among unit plates being longitudinally located to be adjacent to each other, is branched off to both directions to flow along the heating medium passage P1, and then passes a through hole formed at a first plate being located at the other side of the second plate and a through hole formed at a second plate configuring a unit plate located at an upper stage thereamong, thereby flowing in a heating medium passage P1 of the unit plate located at the upper stage.

In a configuration for the purpose of implementing the described above, the passage forming protruding portion D1 is formed to be communicated with an entire section at a region between the edge of the first plane portion A1 and the first through hole B1 along a circumferential direction, the passage forming depressed portion D2 is formed to be communicated with an entire section at a region between the edge of the second plane portion A2 and the second through hole B2 along the circumferential direction, and a through hole is formed at the gap maintaining protruding portion E1 and the gap maintaining depressed portion E2 so as to connect a heating medium passage P1 of a unit plate located at the lower stage to that of a unit plate located at the upper stage, wherein the through hole is located so as to reverse a direction of the heating medium passage P1 at the unit plate located at the lower stage against that of the heating medium passage P1 at the unit plate located at the upper stage.

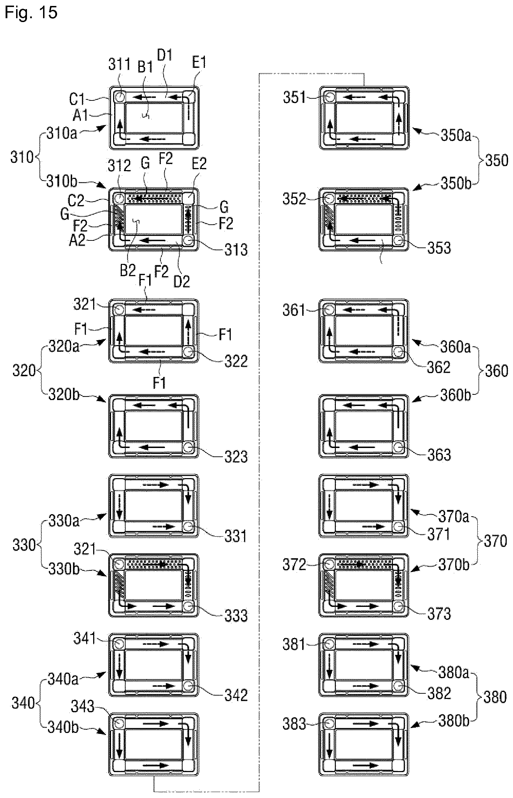

With reference to FIG. 15, a flow channel of a heating medium in the sensible-heat exchange unit 300 will be described in detail.

As arrows shown in FIG. 15, the heating medium, which passed the through hole 391 being formed at the upper cover panel 390a of the heat isolator 390, flows in a heating medium passage P1 inside the unit plate 380 through a through hole 383 formed at the second plate 380b of the unit plate 380 being located at a lower-most stage of the sensible-heat exchange unit 300.

Some of the heating medium, which flows in the heating medium passage P1 inside the unit plate 380, flows in a heating medium passage P1 inside the unit plate 370 through a through hole 381 formed at the first plate 380a and a through hole 372 formed at the second plate 370b of the unit plate 370 being stacked over the first plate 380a, and the remaining of the heating medium is branched off to both sides centering on the through hole 383 to flow in a direction toward a through hole 382 formed at the first plate 380a being located at an opposite side against the second plate 380b and then flows in the heating medium passage P1 inside the unit plate 370 through a through hole 373 formed at the second plate 370b of the unit plate 370 being stacked over the first plate 380a.

The heating medium, which flowed in through the through hole 372 of the unit plate 370, is branched off to both sides to flow in a direction toward a through hole 371 formed at the first plate 370a being located at an opposite side against the second plate 370b, and then flows in a heating medium passage P1 of the unit plate 360 through a through hole 363 formed at the second plate 360b of the unit plate 360 being stacked over the first plate 370a.

Some of the heating medium, which flows in the heating medium passage P1 inside the unit plate 360, flows in a heating medium passage P1 inside the unit plate 350 through a through hole 362 formed at the first plate 360a and a through hole 353 formed at the second plate 350b of the unit plate 350 being stacked over the first plate 360a, and the remaining of the heating medium is branched off to both sides centering on the through hole 363 to flow in a direction toward a through hole 361 formed at the first plate 360a being located at an opposite side against the second plate 360b and then flows in the heating medium passage P1 inside the unit plate 350 through a through hole 352 formed at the second plate 350b of the unit plate 350 being stacked over the first plate 360a.

The heating medium, which flowed in through the through hole 353 of the unit plate 350, is branched off to both sides to flow in a direction toward a through hole 351 formed at the first plate 350a located at an opposite side against the second plate 350b, and then flows in a heating medium passage P1 of the unit plate 340 through a through hole 343 formed at the second plate 340b of the unit plate 340 being stacked over the first plate 350a.

Some of the heating medium, which flows in the heating medium passage P1 inside the unit plate 340, flows in a heating medium passage P1 inside the unit plate 330 through a through hole 341 formed at the first plate 340a and a through hole 332 formed at the second plate 330b of the unit plate 330 being stacked over the first plate 340a, and the remaining of the heating medium is branched off to both sides centering on the through hole 343 to flow in a direction toward a through hole 342 formed at the first plate 340a being located at an opposite side against the second plate 340b and then flows in the heating medium passage P1 inside the unit plate 330 through a through hole 333 formed at the second plate 330b of the unit plate 330 being stacked over the first plate 340a.

The heating medium, which flowed in through the through hole 332 of the unit plate 330, is branched off to both sides to flow in a direction toward a through hole 331 formed at the first plate 330a being located at an opposite side against the second plate 330b, and then flows in a heating medium passage P1 of the unit plate 320 through a through hole 323 formed at the second plate 320b of the unit plate 320 being stacked over the first plate 330a.

Some of the heating medium, which flows in the heating medium passage P1 inside the unit plate 320, flows in a heating medium passage P1 inside the unit plate 310 through a through hole 322 formed at the first plate 320a and a through hole 313 formed at the second plate 310b of the unit plate 310 being stacked over the first plate 320a, and the remaining of the heating medium is branched off to both sides centering on the through hole 323 to flow in a direction toward a through hole 321 formed at the first plate 320a being located at an opposite side against the second plate 320b and then flows in the heating medium passage P1 inside the unit plate 310 through a through hole 312 formed at the second plate 310b of the unit plate 310 being stacked over the first plate 320a.

The heating medium, which flowed in the heating medium passage P1 inside the unit plate 310, is branched off to both sides centering on the through hole 313 to flow toward a through hole 311 formed at the first plate 310a being located at an opposite side against the second plate 310b, and then is discharged through the heating medium discharge pipe 112.

As described above, the passage of the heating medium is branched off to both sides at the upper left end of each of the unit plates 380 and 370 being located at the lower-most stage in the sensible-heat exchange unit 300 so that the heating medium flows in a direction toward the lower right end of each of the unit plates 380 and 370. And, the passage of the heating medium is branched off to both sides at the lower right end of each of the unit plates 360 and 350 being located over the unit plates 380 and 370 so that the heating medium flows in a direction toward the upper left end of each of the unit plates 360 and 350. In addition, the passage of the heating medium is branched off to both sides at the upper left end of each of the unit plates 340 and 330 being located over the unit plates 360 and 350 so that the heating medium flows in a direction toward the lower right end of each of the unit plates 340 and 330. Further, the passage of the heating medium is branched off to both sides at the lower right of each of the unit plates 320 and 310 being located over the unit plates 340 and 330 so that the heating medium flows in a direction toward the upper left end of each of the unit plates 320 and 310. As a result, a direction of the passage may be alternately changed to form the passage of the heating medium to be long.

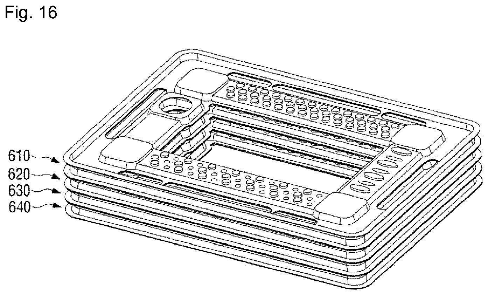

Hereinafter, another embodiment of a flow channel of a heating medium will be described with reference to FIGS. 16 to 18. Unit plates 610, 620, 630, and 640 according to the present embodiment may replace the above described unit plates configuring the sensible-heat exchange unit 300 and the latent-heat exchange unit 400. Hereinafter, a structure of each of the unit plates 610, 620, 630, and 640 configuring a single set and a flow channel of a heating medium inside the structure thereof may be described by exemplifying a case in which such a structure and such a flow channel are applied to the sensible-heat exchange unit 300.

A flow channel of a heating medium according to the present embodiment is configured such that a heating medium, which flowed in through a through hole formed at one side of a second plate configuring one unit plate being located at a lower side among unit plates being longitudinally located to be adjacent to each other, flows in one direction along a heating medium passage P1 and then passes a through hole formed at a first plate being located at an opposite side against the second plate and a through hole formed at a second plate configuring the other unit plate located at an upper side thereamong to flow in a heating medium passage P1 of the other unit plate located at the upper side.

In a configuration for the purpose of implementing the described above, the passage forming protruding portion D1 is formed to be communicated with some section at a region between the edge of the first plane portion A1 and the first through hole B1 along a circumferential direction, the passage forming depressed portion D2 is formed to be communicated with some section at a region between the edge of the second plane portion A2 and the second through hole B2 along the circumferential direction, and a through hole is formed at the gap maintaining protruding portion E1 and the gap maintaining depressed portion E2 so as to connect a heating medium passage P1 of a unit plate being located at the lower side to that of a unit plate being located at the upper side, wherein the through hole is located so as to reverse a direction of the heating medium passage P1 at the unit plate being located at the lower side against that of the heating medium passage P1 at the unit plate being located at the upper side.

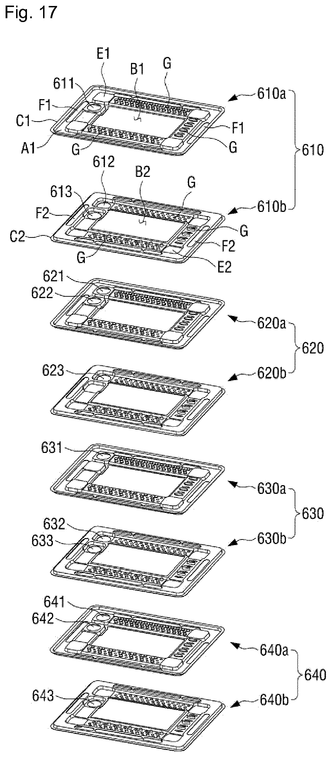

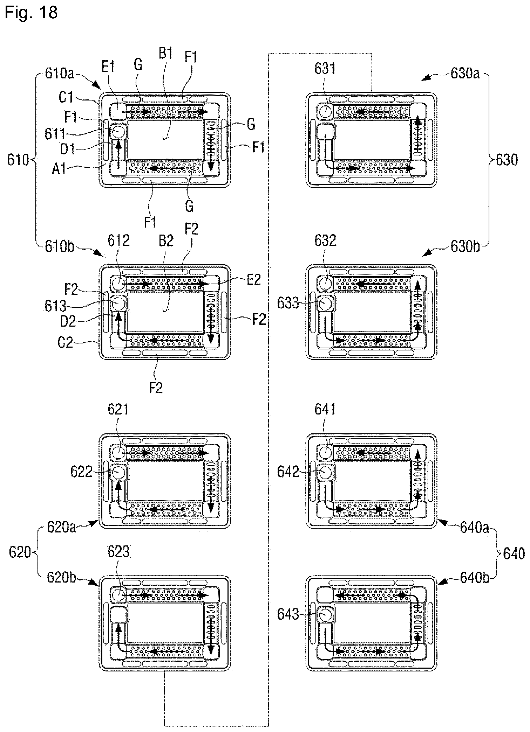

With reference to FIGS. 17 and 18, some of a heating medium, which flowed in a heating medium passage P1 of the unit plate 640 through a through hole 643 formed at a second plate 640b of the unit plate 640 being located at a lower-most stage, flows in a heating medium passage P1 inside the unit plate 630 through a through hole 642 formed at a first plate 640a and a through hole 633 formed at a second plate 630b of the unit plate 630 being stacked over the first plate 640a, and the remaining of the heating medium flows in one direction (a counterclockwise direction when viewed from the top plane) centering on the through hole 643 along the heating medium passage P1, and then flows in the heating medium passage P1 inside the unit plate 630 through a through hole 641 formed at the first plate 640a being located at an opposite side against the second plate 640b and a through hole 632 formed at the second plate 630b of the unit plate 630 being stacked over the first plate 640a.

The heating medium, which flowed in the heating medium passage P1 inside the unit plate 630, flows in one direction (a counterclockwise direction when viewed from the top plane) centering on the through hole 633 along the heating medium passage P1, and then flows in a heating medium passage P1 inside the unit plate 620 through a through hole 631 formed at a first plate 630a located at an opposite side against the second plate 630b and a through hole 623 formed at a second plate 620b of the unit plate 620 being stacked over the first plate 630a.

Some of a heating medium, which flowed in the heating medium passage P1 of the unit plate 620 through the through hole 623, flows in a heating medium passage P1 inside the unit plate 610 through a through hole 621 formed at a first plate 620a and a through hole 612 formed at a second plate 610b of the unit plate 610 being stacked over the first plate 620a, and the remaining of the heating medium flows in another direction (a clockwise direction when viewed from the top plane) centering on the through hole 623 along the heating medium passage P1, and then flows in the heating medium passage P1 inside the unit plate 610 through a through hole 622 formed at the first plate 620a being located at an opposite side against the second plate 620b and a through hole 613 formed at the second plate 610b of the unit plate 610 being stacked over the first plate 620a.

The heating medium, which flowed in the heating medium passage P1 inside the unit plate 610, flows in another direction (a clockwise direction when viewed from the top plane) centering on the through hole 612 along the heating medium passage P1, and then flows in a heating medium passage inside a unit plate (not shown) being located over a first plate 610a through a through hole 611 formed at the first plate 610a located at an opposite side against the second plate 610b.

As described above, according to the present embodiment, the unit plates 640 and 630 being located at a lower stage group may be configured to direct the heating medium to flow in one direction (the counterclockwise direction when viewed from the top plane) along the heating medium passage P1, whereas the unit plates 620 and 610 being located at an upper stage group may be configured to direct the heating medium to flow in another direction (the clockwise direction when viewed from the top plane) along the heating medium passage P1, thereby alternately changing the flow direction of the heating medium to form the passage thereof to be long. And, the unit plates 610, 620, 630, and 640, which have been described as an example in the present disclosure, may be stacked in a plurality of unit sets to configure the heat exchanger 300 or the latent-heat exchange unit 400.

In the above described embodiment, it has been described as an example with respect to a case in which the unit plates configuring the sensible-heat exchange unit 300 are located in a horizontal direction to be longitudinally stacked, the burner 200 is located inside the sensible-heat exchange unit 300 in a longitudinal direction, and the unit plates configuring the latent-heat exchange unit 400 are located below the sensible-heat exchange unit 300 in the horizontal direction to be longitudinally stacked, but the above arrangement structure of the burner 200, the sensible-heat exchange unit 300, and the latent-heat exchange unit 400 may be implemented in a different form.

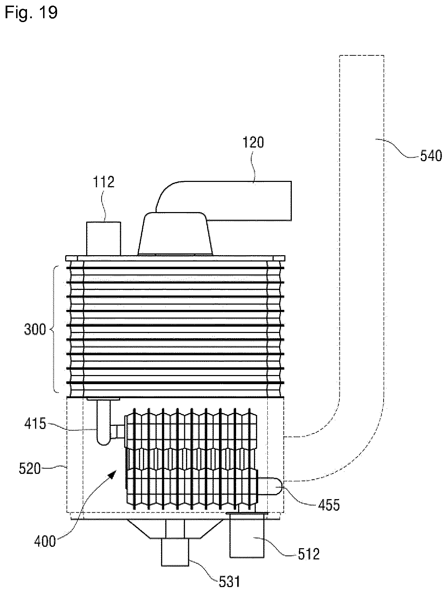

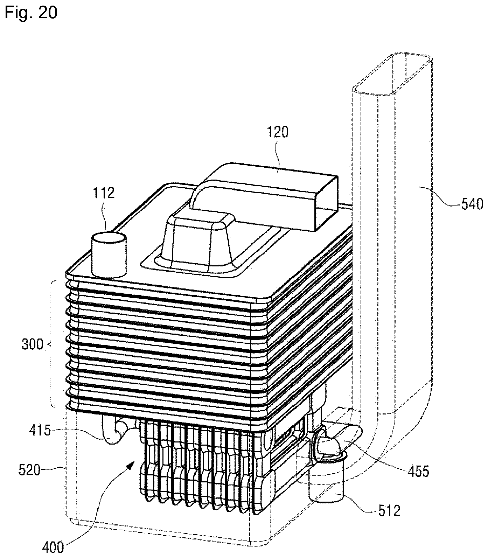

In another embodiment, as shown in FIGS. 19 and 20, it may be configured such that unit plates configuring the sensible-heat exchange unit 300 are located in a horizontal direction to be longitudinally stacked and arranged, the burner 200 is arranged inside the sensible-heat exchange unit 300 in a longitudinal direction, and unit plates configuring the latent-heat exchange unit 400 are located below the sensible-heat exchange unit 300 in a longitudinal direction to be horizontally stacked and arranged. In this case, it may be configured such that a connecting pipe 455 is connected between the heating medium inflow pipe 512 and a heating medium inlet of the latent-heat exchange unit 400, and a connecting pipe 415 is connected between a heating medium outlet of the latent-heat exchange unit 400 and a heating medium inlet of the sensible-heat exchange unit 300.

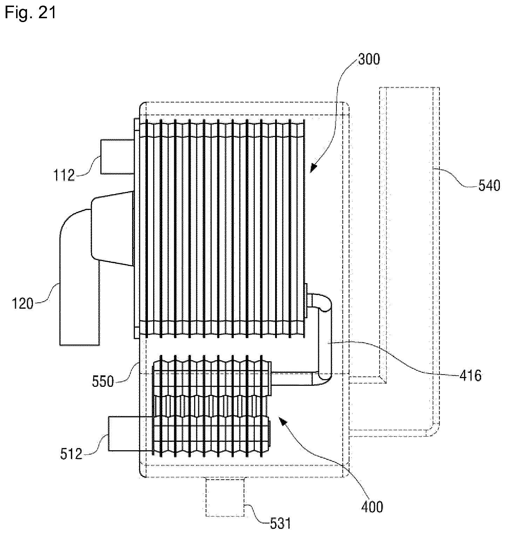

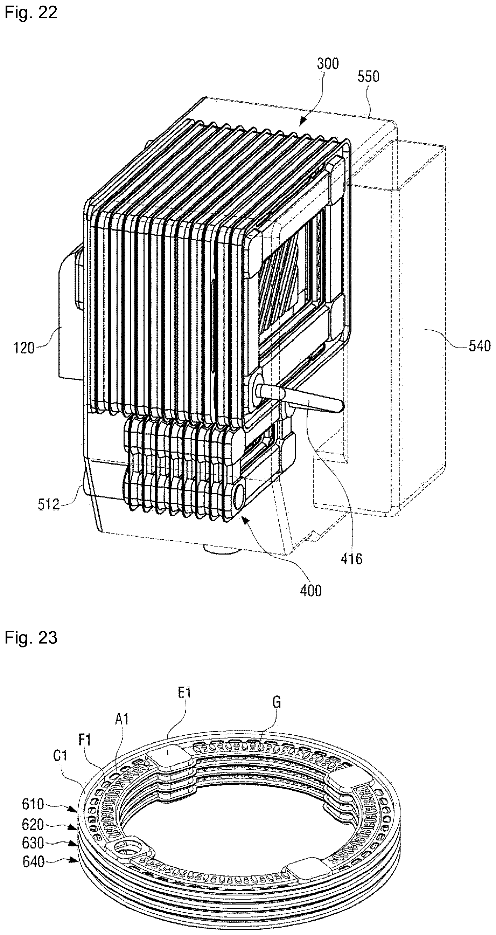

In still another embodiment, as shown in FIGS. 21 and 22, it may be configured such that unit plates configuring the sensible-heat exchange unit 300 are located in a longitudinal direction to be horizontally stacked and arranged, the burner 200 is arranged inside the sensible-heat exchange unit 300 in a horizontal direction, and unit plates configuring the latent-heat exchange unit 400 are located below the sensible-heat exchange unit 300 in the longitudinal direction to be horizontally stacked and arranged. In this case, it may be configured such that a connecting pipe 416 is connected between a heating medium outlet of the latent-heat exchange unit 400 and a heating medium inlet of the sensible-heat exchange unit 300, and the sensible-heat exchange unit 300 and the latent-heat exchange unit 400 are surrounded with a housing 550.

Even in the embodiments shown in FIGS. 19 to 22, a flow channel of combustion gas may be configured such that the combustion gas flows from an inside of the sensible-heat exchange unit 300 to an outside thereof, and then flows from an outside of the latent-heat exchange unit 400 to an inside thereof, thereby being discharged through the combustion gas discharge unit 500, and a flow channel of a heating medium may be applicable the same as in the above described embodiments.

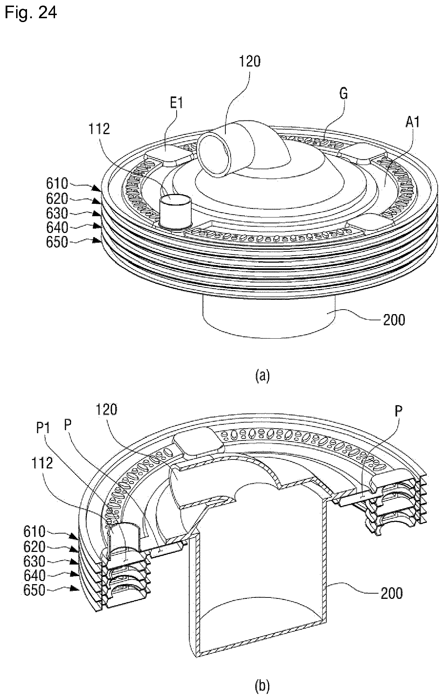

Although the above described embodiments have exemplified the unit plates which configure the heat exchange units 300 and 400 and are formed to surround the burner 200 in a quadrangular shape, the unit plates may be configured in a polygonal shape including a pentagonal shape and the like in addition to the quadrangular shape, and an oval shape. Further, as shown in FIGS. 23 and 24, unit plates 610, 620, 630, 640, and 650 may be arranged and configured in a circular shape.

Meanwhile, as shown in FIG. 24, a heating medium connecting passage P may be additionally formed and configured at a lateral circumferential surface of an upper part of the burner 200, wherein the heating medium connecting passage P is connected to the heating medium passage P1 located at the upper part of the burner 200, thereby allowing a heating medium to pass the heating medium connecting passage P.

With a configuration of the heating medium connecting passage P, it may prevent a burner supporting plate from being overheated by combustion heat transferred through the upper part of the burner 200, and the combustion heat of combustion gas may be absorbed by the heating medium passing the heating medium connecting passage P such that insulation and thermal efficiency may be more improved.

Hereinafter, a method for manufacturing a unit plate configuring the heat exchanger being configured as described above of the present disclosure will be described.

In manufacturing a unit plate configuring the sensible-heat exchange unit 300 and a unit plate configuring the latent-heat exchange unit 400, the present disclosure may be configured to simplify a manufacturing process and also to reduce a material cost of each of the unit plates.

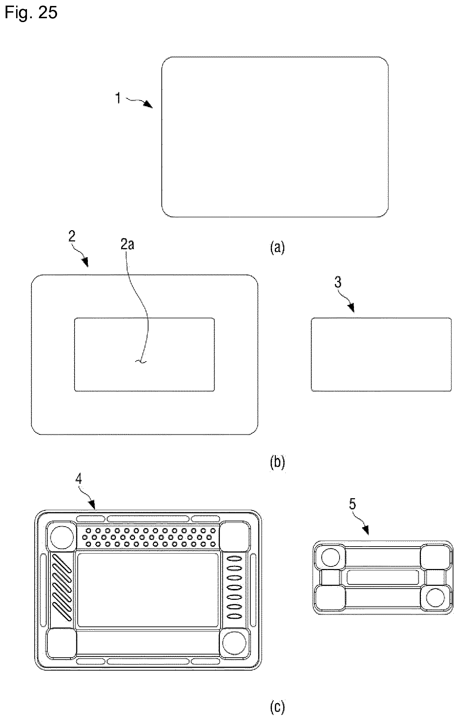

With reference to FIG. 25, as one embodiment of a method for manufacturing a unit plate configuring a heat exchanger according to the present disclosure, the method may be configured with (a) preparing a base metal plate 1 to be processed as a unit plate configuring the sensible-heat exchange unit 300 and a unit plate configuring the latent-heat exchange unit 400, (b) cutting a central part of the base metal plate 1 in a size of the first through hole B1 of the first plate, or in a size of the second through hole B2 of the second plate, thereby manufacturing a first processing plate 2 to be processed as the unit plate configuring the sensible-heat exchange unit 300 and a second processing plate 3 to be processed as the unit plate configuring the latent-heat exchange unit 400, and (c) performing sheet metal working on the first processing plate 2 to manufacture a first or second plate 4 of the unit plate configuring the sensible-heat exchange unit 300, and performing sheet metal working on the second processing plate 3 to manufacture a third or fourth plate 5 of the unit plate configuring the latent-heat exchange unit 400.

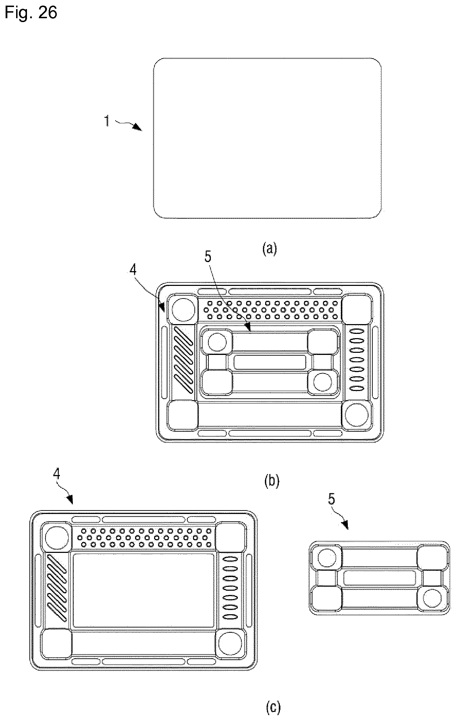

With reference to FIG. 26, as another embodiment of a method for manufacturing a unit plate configuring a heat exchanger according to the present disclosure, the method may be configured with (a) preparing a base metal plate 1 to be processed as a unit plate configuring the sensible-heat exchange unit 300 and a unit plate configuring the latent-heat exchange unit 400, (b) performing sheet metal working on the base metal plate 1 to form a shape of a first or second plate 4 of the unit plate configuring the sensible-heat exchange unit 300, and a shape of a third or fourth plate 5 of the unit plate configuring the latent-heat exchange unit 400, and (c) cutting a boundary between a part at which the shape of the first or second plate 4 is formed and a part at which the shape of the third or fourth plate 5 is formed, thereby manufacturing the first or second plate 4 and the third or fourth plate 5.

Here, the sheet metal working means that blanking is sequentially performed on the base metal plate 1 by means of a series of dies, thereby forming and punching the base metal plate 1 in a predetermined shape.

According to the above described method for manufacturing a unit plate configuring a heat exchanger, because the unit plate configuring the latent-heat exchange unit 400 may be manufactured using a material being cut for forming the first through hole B1 and the second through hole B2 when the unit plate configuring the sensible-heat exchange unit 300 is manufactured, waste of a material may be prevented and also the process of manufacturing the unit plate configuring the sensible-heat exchange unit 300 and the unit plate configuring the latent-heat exchange unit 400 may be simultaneously performed so that there is an advantage in which the method for manufacturing a unit plate may be simplified.

As described above, the present disclosure is not limited to the described embodiments, and it should be construed that modifications can be apparently devised by those skilled in the art without departing from the technical spirit of this disclosure defined by the appended claims, and also such modifications will fall within the scope of this disclosure.

## Claims

1. A heat exchanger comprising:
a mixture inflow unit (100) in which a mixture of air and fuel flows;
a burner (200) configured to burn the mixture flowing in through the mixture inflow unit (100);
a sensible-heat exchange unit (300) provided at a circumference of the burner (200), configured to exchange heat between combustion gas generated by combustion of the burner (200) and a heating medium, and configured with a plurality of unit plates being stacked;
a latent-heat exchange unit (400) configured to exchange heat between the combustion gas passed the sensible-heat exchange unit (300) and the heating medium, and configured with a plurality of unit plates being stacked; and
a combustion gas discharge unit (500) configured to discharge the combustion gas passed the latent-heat exchange unit (400),
wherein, in an inside of each of the plurality of unit plates that are stacked to configure the sensible-heat exchange unit (300), a heating medium passage (P1) and a combustion gas passage (P2) are separately and alternately formed to be adjacent to each other, and also a combustion gas discharge passage (P3) is formed to connect the combustion gas passage (P2) to the combustion gas discharge unit (500), and
wherein, in an inside of each of the plurality of unit plates that are stacked to configure the latent-heat exchange unit (400), a heating medium passage (P4) and a combustion gas passage (P5) are separately and alternately formed to be adjacent to each other.

2. The heat exchanger of claim 1, wherein each of the plurality of unit plates configuring the sensible-heat exchange unit (300) is configured with a first plate and a second plate which are stacked,
wherein the first plate includes:
a first plane portion (A1) in which a first through hole (B1) is formed at a central part thereof;
a first flange portion (C1) formed to extend from an edge of the first plane portion (A1) to be bended to an outward side thereof; and
a passage forming protruding portion (D1) formed to be convex upward at a region between the edge of the first plane portion (A1) and the first through hole (B1), and
wherein the second plate includes:
a second plane portion (A2) in which a second through hole (B2) of a shape corresponding to that of the first through hole (B1) is formed at a central part of the second plane portion (A2), and coming into tight contact with the first plane portion (A1);
a second flange portion (C2) formed to extend from an edge of the second plane portion (A2) to be bended to an outward side thereof, and coupled to a first flange portion (C1) of a unit plate being located adjacent to the second flange portion (C2); and
a passage forming depressed portion (D2) formed to be concave downward at a region between the edge of the second plane portion (A2) and the second through hole (B2), thereby forming the heating medium passage (P1) between the passage forming protruding portion (D1) and the passage forming depressed portion (D2).

3. The heat exchanger of claim 2, wherein each of the plurality of unit plates configuring the latent-heat exchange unit (400) is configured with a third plate and a fourth plate which are stacked,
wherein the third plate includes:
a third plane portion (A3) in which a third through hole (B3) is formed at a central part thereof;
a third flange portion (C3) formed to extend from an edge of the third plane portion (A3) to be bended to an outward side thereof; and
a passage forming protruding portion (D3) formed to be convex upward at a region between the edge of the third plane portion (A3) and the third through hole (B3), and
wherein the fourth plate includes:
a fourth plane portion (A4) in which a fourth through hole (B4) of a shape corresponding to that of the third through hole (B3) is formed at a central part of the fourth plane portion (A4), and coming into tight contact with the third plane portion (A3);
a fourth flange portion (C4) formed to extend from an edge of the fourth plane portion (A4) to be bended to an outward side thereof, and coupled to the third flange portion (C3); and
a passage forming depressed portion (D4) formed to be concave downward at a region between the edge of the fourth plane portion (A4) and the fourth through hole (B4), thereby forming the heating medium passage (P4) between the passage forming protruding portion (D3) and the passage forming depressed portion (D4).

4. The heat exchanger of claim 2, wherein the first flange portion (C1) is formed to be higher than a protruding height of the passage forming protruding portion (D1), and the second flange portion (C2) is formed to be deeper than a depressed depth of the passage forming depressed portion (D2), and thus a separated space forming the combustion gas passage (P2) is provided between a depressed end of a passage forming depressed portion (D2) of a unit plate being located at one side among unit plates being located to be adjacent to each other and a protruding end of a passage forming protruding portion (D1) of a unit plate being located at the other end thereamong.

5. The heat exchanger of claim 4, wherein a plurality of gap maintaining protruding portions (E1), each of which protrudes at the same height as that of the first flange portion (C1), are formed to be spaced apart from each other at the passage forming protruding portion (D1) in a circumferential direction, and a plurality of gap maintaining depressed portions (E2), each of which is depressed at the same depth as that of the second flange portion (C2), are formed to be spaced apart from each other at the passage forming depressed portion (D2) in the circumferential direction, and thus a depressed end of each of the plurality of gap maintaining depressed portions (E2) of a unit plate being located at one side among the unit plates being located to be adjacent to each other, and a protruding end of each of the plurality of gap maintaining protruding portions (E1) of a unit plate being located at the other side thereamong come into contact with each other.

6. The heat exchanger of claim 4, wherein a combustion gas outlet (F1) is formed at the edge of the first plane portion (A1) to provide the combustion gas discharge passage (P3), and a combustion gas outlet (F2) is formed at a position, which corresponds to the combustion gas outlet (F1), on the edge of the second plane portion (A2), and thus combustion gas passed the combustion gas passage (P2) sequentially passes the combustion gas outlets (F1) and (F2) which are formed at each of the unit plates configuring the sensible-heat exchange unit (300), thereby flowing toward the combustion gas discharge unit (500).

7. The heat exchanger of claim 5, wherein a turbulent flow forming portion (G) having an irregular shape is formed at the passage forming protruding portion (D1) or the passage forming depressed portion (D2), wherein a protruding upper end and a depressed lower end of the turbulent flow forming portion (G) are formed to come into contact with each other inside the heating medium passage (P1) and the combustion gas passage (P2).

8. The heat exchanger of claim 5, wherein the passage forming protruding portion (D1) is formed to be communicated with an entire section at a region between the edge of the first plane portion (A1) and the first through hole (B1) along the circumferential direction, the passage forming depressed portion (D2) is formed to be communicated with an entire section at a region between the edge of the second plane portion (A2) and the second through hole (B2) along the circumferential direction, and a through hole is formed at each of the plurality of gap maintaining protruding portions (E1) and each of the plurality of gap maintaining depressed portions (E2) so as to connect a heating medium passage (P1) of the unit plate located at the one side to a heating medium passage (P1) of the unit plate located at the other side adjacent to the one side,
wherein the through hole is located so as to reverse a direction of the heating medium passage (P1) of the unit plate located at the one side against that of the heating medium passage (P1) of the unit plate located at the other side adjacent to the one side.

9. The heat exchanger of claim 8, wherein a heating medium, which flowed in through a through hole formed at one side of a second plate configuring the unit plate located at one side among the unit plates being located to be adjacent to each other and configuring the sensible-heat exchange unit (300), is branched off to both directions to flow along the heating medium passage (P1), and then passes a through hole formed at a first plate being located at the other side adjacent to the one side and a through hole formed at a second plate configuring a unit plate being located adjacent to the other side, thereby flowing in a heating medium passage (P1) of the unit plate being located adjacent to the other side.

10. The heat exchanger of claim 5, wherein the passage forming protruding portion (D1) is formed to be communicated with some section at a region between the edge of the first plane portion (A1) and the first through hole (B1) along the circumferential direction, the passage forming depressed portion (D2) is formed to be communicated with some section at a region between the edge of the second plane portion (A2) and the second through hole (B2) along the circumferential direction, and a through hole is formed at each of the plurality of gap maintaining protruding portions (E1) and each of the plurality of gap maintaining depressed portions (E2) so as to connect a heating medium passage (P1) of the unit plate located at the one side to a heating medium passage (P1) of the unit plate located at the other side adjacent to the one side,
wherein the through hole is located so as to reverse a direction of the heating medium passage (P1) of the unit plate located at the one side against that of the heating medium passage (P1) of the unit plate located at the other side adjacent to the one side.

11. The heat exchanger of claim 10, wherein a heating medium, which flowed in through a through hole formed at one side of a second plate configuring the unit plate located at one side among the unit plates being located to be adjacent to each other and configuring the sensible-heat exchange unit (300), flows in one direction along the heating medium passage (P1), and then passes a through hole formed at a first plate being located at the other side and a through hole formed at a second plate configuring a unit plate being located adjacent to the other side, thereby flowing in a heating medium passage (P1) of the unit plate being located adjacent to the other side.

12. The heat exchanger of claim 9 or 11, wherein multiple heating medium passages (P1) are configured in parallel with each other by stacking the unit plate.

13. The heat exchanger of claim 3, wherein a plurality of gap maintaining protruding portions (E3) are formed to be spaced apart from each other at the passage forming protruding portion (D3) in a circumferential direction, and a plurality of gap maintaining depressed portions (E4) are formed to be spaced apart from each other at the passage forming depressed portion (D4) in the circumferential direction, and thus an end of each of the plurality of gap maintaining protruding portions (E3) of a unit plate being located at one side among the unit plates being located to be adjacent to each other and configuring the latent-heat exchange unit (400), and an end of each of the plurality of gap maintaining depressed portions (E4) of a unit plate being located adjacent to the other side thereamong come into contact with each other.

14. The heat exchanger of claim 13, wherein a through hole, through which the heating medium passes, is formed at both sides opposite to each other at a maximum distance among the plurality of gap maintaining protruding portions (E3), and a through hole, which corresponds to the through hole formed at the both sides among the plurality of gap maintaining protruding portions (E3), is formed at both ends opposite to each other at a maximum distance among the plurality of gap maintaining depressed portions (E4), thereby allowing the heating medium to flow inside the heating medium passage (P4) in both directions.

15. The heat exchanger of claim 1, wherein the plurality of unit plates configuring the sensible-heat exchange unit (300) are located in a horizontal direction to be longitudinally stacked and arranged, the burner (200) is arranged inside the sensible-heat exchange unit (300) in a longitudinal direction, and the plurality of unit plates configuring the latent-heat exchange unit (400) are located below the sensible-heat exchange unit (300) in the horizontal direction to be longitudinally stacked and arranged.

16. The heat exchanger of claim 1, wherein the plurality of unit plates configuring the sensible-heat exchange unit (300) are located in a horizontal direction to be longitudinally stacked and arranged, the burner (200) is arranged inside the sensible-heat exchange unit (300) in a longitudinal direction, and the plurality of unit plates configuring the latent-heat exchange unit (400) are located below the sensible-heat exchange unit (300) in the longitudinal direction to be horizontally stacked and arranged.

17. The heat exchanger of claim 1, wherein the plurality of unit plates configuring the sensible-heat exchange unit (300) are located in a longitudinal direction to be horizontally stacked and arranged, the burner (200) is arranged inside the sensible-heat exchange unit (300) in a horizontal direction, and the plurality of unit plates configuring the latent-heat exchange unit (400) are located below the sensible-heat exchange unit (300) in the longitudinal direction to be horizontally stacked and arranged.

18. The heat exchanger of claim 1, wherein the plurality of unit plates are arranged to surround the circumference of the burner (200) in a polygonal shape, a circular shape, or an oval shape.

19. The heat exchanger of claim 1, wherein a heating medium connecting passage (P) is formed at a lateral circumferential surface of an upper part of the burner (200), wherein the heating medium connecting passage (P) is connected to a heating medium passage (P1) located at the upper part of the burner (200), thereby allowing the heating medium to pass the heating medium connecting passage (P).

20. A method for manufacturing a unit plate configuring a heat exchanger, comprising:
preparing a base metal plate (1) to be processed as a unit plate configuring the sensible-heat exchange unit (300), and as a unit plate configuring the latent-heat exchange unit (400) disclosed in claim (3);
cutting a central part of the base metal plate (1) in a size of a first through hole (B1) of a first plate, or in a size of a second through hole (B2) of a second plate, thereby manufacturing a first processing plate (2) to be processed as the unit plate configuring the sensible-heat exchange unit (300) and a second processing plate (3) to be processed as the unit plate configuring the latent-heat exchange unit (400);
performing sheet metal working on the first processing plate (2) to manufacture a first plate or a second plate of the unit plate configuring the sensible-heat exchange unit (300); and
performing the sheet metal working on the second processing plate (3) to manufacture a third plate or a fourth plate of the unit plate configuring the latent-heat exchange unit (400).

21. A method for manufacturing a unit plate configuring a heat exchanger, comprising:
preparing a base metal plate (1) to be processed as a unit plate configuring the sensible-heat exchange unit (300), and as a unit plate configuring the latent-heat exchange unit (400) disclosed in claim (3);
performing sheet metal working on the base metal plate (1) to form a shape of a first plate or a second plate of the unit plate configuring the sensible-heat exchange unit (300), and a shape of a third plate or a fourth plate of the unit plate configuring the latent-heat exchange unit (400); and
cutting a boundary between a part at which the shape of the first plate or the second plate is formed and a part at which the shape of the third plate or the fourth plate is formed, thereby manufacturing the first or second plate and the third or fourth plate.
